(19) Europäisches Patentamt
European Patent Office
Office européen des brevets

(11) **EP 3 072 730 A1**

(12) **EUROPEAN PATENT APPLICATION**
published in accordance with Art. 153(4) EPC

(43) Date of publication:
28.09.2016 Bulletin 2016/39

(51) Int Cl.:
**B60L 15/20** (2006.01)   **B60T 8/176** (2006.01)

(21) Application number: 14863006.4

(22) Date of filing: 06.11.2014

(86) International application number:
PCT/JP2014/079407

(87) International publication number:
WO 2015/072384 (21.05.2015 Gazette 2015/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 18.11.2013 JP 2013237726

(71) Applicant: NTN Corporation
Osaka-shi, Osaka 550-0003 (JP)

(72) Inventor: SUGAI, Tomohiro
Iwata-shi
Shizuoka 438-0037 (JP)

(74) Representative: Hirsch & Associés
137, rue de l'Université
75007 Paris (FR)

(54) **ANTILOCK BRAKE CONTROL DEVICE**

(57) The antilock brake control device (1) is used in a vehicle including: a motor (3) to drive a wheel; a wheel bearing to transmit a rotation of the motor (3) to the wheel and to rotationally support the wheel; and a friction brake to urge a press member against a brake rotor provided in each wheel, to generate a frictional force to brake the wheel. The antilock brake control device (1) includes slip ratio monitor (21) to monitor a slip ratio of the wheel; and driving torque addition section (22) to add a torque in a driving direction to a torque command value for the motor (3) when the slip ratio monitored by the slip ratio monitor (21) exceeds a target slip ratio. When the torque in the driving direction is added to the torque command value for the motor (3), the friction brake is not operated.

Fig. 3

# EP 3 072 730 A1

## Description

### CROSS REFERENCE TO THE RELATED APPLICATION

This application is based on and claims Convention priority to Japanese patent application No. 2013-237726, filed November 18, 2013, the entire disclosure of which is herein incorporated by reference as a part of this application.

### BACKGROUND OF THE INVENTION

(Field of the Invention)

The present invention relates to an antilock brake control device that prevents each wheel from locking during braking of a vehicle, and particularly relates to an antilock brake control device for an in-wheel motor driving type vehicle including a friction brake.

(Description of Related Art)

Hitherto, as an antilock brake control device that prevents each wheel from locking during braking of a vehicle, a control device has been proposed which includes fluid pressure adjustment mechanism in a hydraulic friction brake and adjusts a fluid pressure such that a slip ratio becomes a target slip ratio (e.g., Patent Document 1).

In addition, in recent years, as one form of electric vehicles, a so-called in-wheel motor type vehicle has been developed in which a motor is incorporated into a wheel and the wheel is driven directly by the motor. The in-wheel motor type vehicle has a characteristic of being able to individually control a driving torque or a braking torque which is provided to each wheel. A control device has been proposed which performs antilock brake control by causing a mechanical brake and an electrical brake for an in-wheel motor to cooperate with each other (e.g., Patent Document 2).

[Related Document]

[Patent Document]

[Patent Document 1] JP Laid-open Patent Publication No. H09-328063
[Patent Document 2] JP Patent No. 3972535

The antilock brake control device including the fluid pressure adjustment mechanism as disclosed in Patent Document 1 needs an additional actuator, such as an ON/OFF operation solenoid valve or a linear solenoid, which is used for antilock brake control and serves to adjust a brake fluid pressure of the friction brake, resulting in higher cost of the antilock brake control device.

In the control device that performs antilock brake control by causing the mechanical brake and the electrical brake for the in-wheel motor to cooperate with each other as disclosed in Patent Document 2, an additional actuator is needed to control the mechanical brake, as antilock brake control, independently of a braking instruction (an brake pedal depressing force) from a driver, resulting in higher cost of the control device as with Patent Document 1.

### SUMMARY OF THE INVENTION

An object of the present invention is to provide an antilock brake control device that does not need an additional actuator for a friction brake which brakes each wheel driven by a motor in a vehicle and that is able to suppress locking of each wheel or reduce locking tendency of each wheel at low cost.

Hereinafter, in order to facilitate understanding of the present invention, the present invention will be described with reference to the reference numerals in embodiments for the sake of convenience.

An antilock brake control device 1 according to the present invention is an antilock brake control device in a vehicle including: a motor 3 configured to drive a wheel 2; a wheel bearing 5 configured to transmit a rotation of the motor 3 to the wheel 2 and to rotationally support the wheel 2; and a friction brake 7 configured to urge a press member 9 against a brake rotor 8 provided in each wheel 2, thereby to generate a frictional force to brake the wheel 2, the antilock brake control device including:

a slip ratio monitor 21 configured to monitor a slip ratio of the wheel 2; and

a driving torque addition section 22 configured to add a torque in a driving direction to a torque command value for the motor 3 when the slip ratio monitored by the slip ratio monitor 21 exceeds a preset target slip ratio, wherein an operation of the friction brake 7 is suspended when the torque in the driving direction is added to the torque command value for the motor 3.

As the "target slip ratio", for example, a slip ratio at which a frictional coefficient with a road surface is maximum is used. The "motor 3 configured to drive a wheel 2" may be a motor connected to each wheel in a one-to-one relation, and a so-called one motor type with a plurality of wheels driven by one motor is not included.

According to this configuration, the friction brake 7 or urges presses the press member 9 against the brake rotor 8 provided in each wheel 2 thereby to generate a frictional force to brake the wheel 2. The slip ratio of the wheel 2 changes moment by moment, and, for example, the slip ratio monitor 21 constantly monitors the calculated slip ratio of the wheel 2. When the monitored slip ratio exceeds the target slip ratio, the driving torque addition section 22 adds a positive torque, that is, a torque in the driving direction, to the torque command value for the motor 3, thereby suppressing locking of the wheel 2. When adding the torque in the driving direction, for example, for antilock brake control, the antilock brake control device 1 adjusts the fluid pressure of the brake fluid by fluid pressure adjustment mechanism provided at a master cylinder, or the like, such that the friction brake 7 is not operated. Thus, in the vehicle in which each wheel 2 is driven by the motor 3, an additional actuator or the like (such as the fluid pressure adjustment mechanism) is not needed for the friction brake 7 configured to brake each wheel 2, and it is possible to suppress locking of the wheel 2 or reduce locking tendency of the wheel 2 at low cost, for example, by merely rewriting a control program or the like.

The driving torque addition section 22 may determine the torque to be added, through PID control based on a deviation between the monitored slip ratio and the target slip ratio. In this case, for example, the antilock brake control device 1 adds a PID calculation value to a torque command value from a primary control unit 11, to calculate a motor torque. When the torque command value from the primary control unit 11 is negative, that is, when regenerative braking is performed, the regenerative braking is loosened. When the torque command value from the primary control unit 11 is zero, a driving torque is generated. Accordingly, locking of each wheel 2 can be suppressed or locking tendency of each wheel 2 can be reduced. The friction brake 7 is controlled in accordance with a depressing amount of a brake pedal 14, or the like, independently of the antilock brake control device 1.

An acceleration sensor 19 configured to detect an acceleration in a front-rear direction of the vehicle may be provided, and the driving torque addition section 22 may use the acceleration detected by the acceleration sensor 19 instead of a differential value of a vehicle speed, in the case that calculating a differential value to be used in the PID control based on the deviation is needed. Since the differential value of the deviation is calculated or obtained by using the acceleration detected by the acceleration sensor 19 as described above, when a noise of a vehicle speed signal is great, the influence of the noise can be reduced.

A road surface frictional coefficient estimation section 20 configured to estimate a road surface frictional coefficient may be provided, and when the road surface frictional coefficient estimated by the road surface frictional coefficient estimation section 20 is lower than a preset road surface frictional coefficient, the driving torque addition section 22 may make a proportional gain and an integral gain lower than respective predetermined gains. In addition, in the case where a road surface frictional coefficient estimation section 20 is provided, when the road surface frictional coefficient estimated by the road surface frictional coefficient estimation section 20 is higher than a preset road surface frictional coefficient, the driving torque addition section 22 may make a proportional gain and an integral gain higher than the respective predetermined gains. The "preset road surface frictional coefficient" is determined by a test, simulation, or the like.

On a road surface having a high frictional coefficient, responsiveness can be enhanced by increasing the proportional gain and the integral gain, and on a road surface having a low frictional coefficient (a low μ road), stability of the control can be ensured by making the proportional gain and the integral gain lower than the respective predetermined gains. A braking/driving force generated by the torque of the in-wheel motor has, for example, better controllability and quicker responsiveness than a braking force generated by fluid pressure adjustment mechanism of a hydraulic friction brake. Thus, a control gain can be increased, so that the accuracy of control improves. On a low μ road, since instability may be caused when the gains are high, stability of the control can be ensured by decreasing the gains.

The slip ratio monitor 21 may monitor a slip ratio $\lambda$ of the wheel 2 that is obtained on the basis of a formula, $\lambda = (V-r\omega)/V$, from an angular speed $\omega$ of the wheel 2, a vehicle speed V, and a radius r of the wheel 2, and may obtain the angular speed $\omega$ of the wheel 2 by using a low-pass filter 25 that is different from a low-pass filter for control of the motor 3 and that has a cut-off frequency higher than a predetermined frequency. The "predetermined frequency" is set by a test, simulation, or the like. In this case, in measurement and calculation of the angular speed $\omega$ of the wheel 2, by using the low-pass filter 25 that is different from the low-pass filter for control of the motor 3 and that has a high cut-off frequency, a response delay can be made smaller than in the case where the wheel speed $\omega$ is obtained without using the low-pass filter 25. During antilock brake control, a response delay can be reduced to improve the accuracy of slip ratio control.

The torque in the driving direction may be added to the torque command value for the motor 3 by the driving torque addition section 22 in a state where the press member 9 is urged or pressed against the brake rotor 8 thereby to cause the friction brake 7 to perform a braking operation by an operation performed by a driver. Accordingly, in the operation state of the driver, locking of each wheel can be suppressed or locking tendency of each wheel can be reduced.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 is a diagram schematically showing a system configuration of an antilock brake control device according to a first embodiment of the present invention;
Fig. 2 is a diagram showing, in combination, a front view of an in-wheel motor drive device and a block diagram of a control system in a vehicle equipped with the antilock brake control device;
Fig. 3 is a block diagram of a main part of a control system of the antilock brake control device;
Fig. 4 is a block diagram of a main part of a control system of an antilock brake control device according to another embodiment of the present invention; and
Fig. 5 is a diagram schematically showing a system configuration of an antilock brake control device according to still another embodiment of the present invention.

DESCRIPTION OF EMBODIMENTS

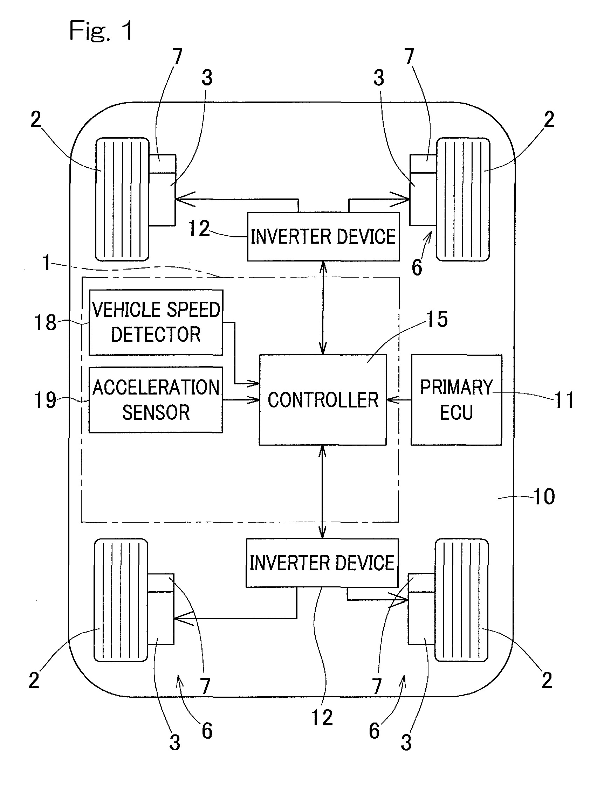

A first embodiment of the present invention will be described with reference to Figs. 1 to 3. Fig. 1 is a diagram schematically showing a system configuration of an antilock brake control device according to the first embodiment. Fig. 1 shows an example in which the antilock brake control device 1 is mounted on a four-wheel drive vehicle. A vehicle that is the four-wheel drive vehicle includes left and right wheels 2, 2 at the front and rear sides of a vehicle body as drive wheels respectively, and the respective wheels 2, 2 are driven by corresponding independent traction motors 3, 3.

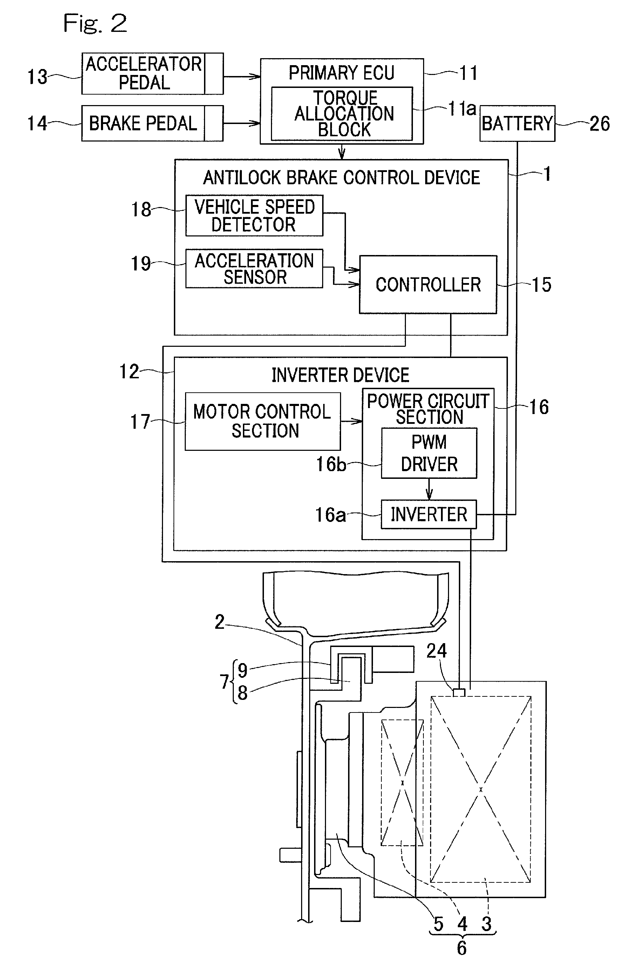

As shown in Fig. 2, a rotation of each motor 3 is transmitted via a reducer 4 and a wheel bearing 5 to the corresponding wheel 2. The motor 3, the reducer 4, and the wheel bearing 5 are integrally assembled with each other to form an in-wheel motor drive device 6. The wheels 2 that are the front wheels are steered wheels. In each wheel 2, an electrical or mechanical friction brake 7 is provided. The friction brake 7 presses a brake pad 9, which is a press member, against a brake rotor 8 provided in the wheel 2, respectively, thereby to generate a frictional force to brake the wheel 2. The friction brake 7 is controlled in accordance with a depressing amount of a brake pedal 14, or the like, independently of the antilock brake control device 1.

A control system will be described. As shown in Fig. 1, a primary ECU 11, the antilock brake control device 1, and inverter devices 12 are mounted on a vehicle body 10. The primary ECU 11 includes a computer, programs that are executed by the computer, and various electronic circuits. A light electrical current system of the antilock brake control device 1 and inverter devices 12 also includes a computer, programs that are executed by the computer, and various electronic circuits.

Fig. 2 is a diagram showing, in combination, a front view of the in-wheel motor drive device 6 and a block diagram of the control system in the vehicle equipped with the antilock brake control device 1. The primary ECU 11 is an electronic control unit that performs an integrated control and cooperative control of an entirety of the vehicle. The primary ECU 11 includes a torque allocation block 11 a, and the torque allocation block 11 a generates an accelerating/decelerating command as a driving or braking torque command value, which is to be sent to each motor 3, on the basis of an amount of stroke of an accelerator pedal 13, a depressing force of the brake pedal 14, and the like, and outputs the accelerating/decelerating command to a controller 15 of the antilock brake control device 1. The braking torque has a negative value.

Each inverter device 12 includes: a power circuit section 16 that is a power conversion circuit provided for each motor 3; and a motor control section 17 that controls the power circuit section 16. Then inverter device 12 includes: two power circuit sections 16 and two motor control sections 17. The power circuit section 16 includes: an inverter 16a that converts DC power from a battery 26 into three-phase AC power to be used for driving the motor 3; and a PWM driver 16b that controls the inverter 16a.

Each motor 3 is composed of a three-phase synchronous motor such as an interior permanent magnet (IPM) synchronous motor. The inverter 16a includes a plurality of semiconductor switching elements, and the PWM driver 16b performs a pulse width modulation of an inputted current command and sends ON/OFF commands to each of the semiconductor switching elements.

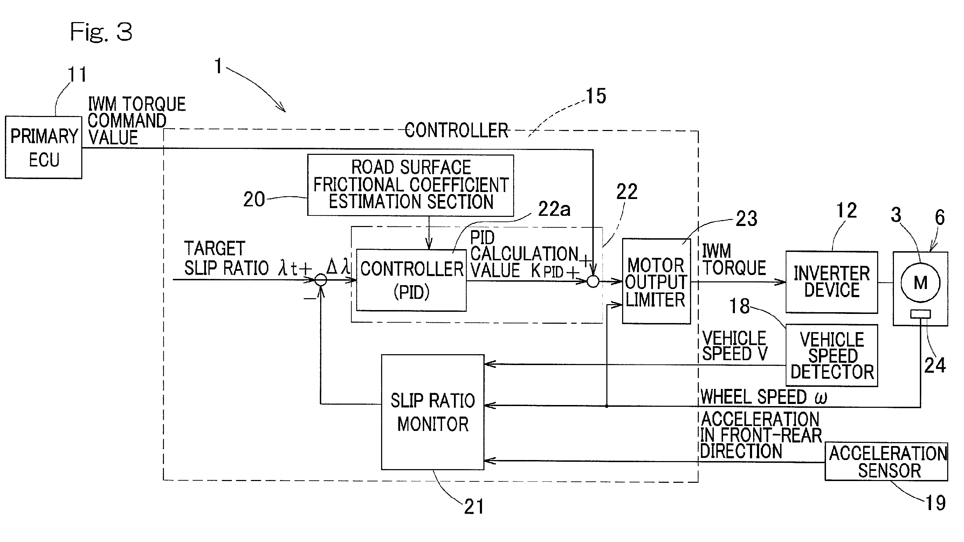

The antilock brake control devices 1 includes the controller 15, a vehicle speed detector 18, and an acceleration sensor 19. Fig. 3 is a block diagram of a main part of a control system of the antilock brake control device 1. The controller 15 includes a slip ratio monitor 21, a driving torque addition section 22, a road surface frictional coefficient estimation section 20, and a motor output limiter 23. The slip ratio monitor 21 monitors a slip ratio of the wheel, and calculates a slip ratio $\lambda$ of the wheel on the basis of the following formula (1) from an angular speed (wheel speed) $\omega$ of the wheel, a vehicle speed V, and a radius r of the wheel.

$$\lambda = (V - r\omega)/V \qquad (1)$$

In each motor 3, a wheel speed sensor 24 that detects a motor rotation speed is incorporated. The angular speed $\omega$ of the wheel is obtained through calculation from the motor rotation speed detected constantly by the wheel speed sensor 24. The vehicle speed detector 18 detects the vehicle speed V. The slip ratio $\lambda$ of the wheel is calculated from the wheel speed $\omega$, the vehicle speed V, and the radius r.

When the slip ratio $\lambda$ monitored by the slip ratio monitor 21 exceeds a preset target slip ratio $\lambda_t$, the driving torque addition section 22 adds a torque in a driving direction to a torque command value for the motor 3 (shown as "IWM TORQUE COMMAND VALUE" in Fig. 3). Specifically, in a state where the brake pads are pressed against the brake rotors, respectively, thereby to cause the friction brake to perform a braking operation by an operation of the brake pedal by the driver, the torque in the driving direction is added to the torque command value for the motor 3 by the driving torque addition section 22. At this time, for example, for antilock brake control, the antilock brake control device 1 adjusts the fluid pressure of a brake fluid by fluid pressure adjustment mechanism called an ABS actuator provided at a master cylinder, or the like, such that the friction brake 7 is not operated. Thus, the vehicle according to the present embodiment does not include, for example, the fluid pressure adjustment mechanism or the like. The addition of the torque in the driving direction may be performed periodically, for example, at a period of several milliseconds. The driving torque addition section 22 includes a controller (PID) 22a, and the controller 22a performs a proportional-integral-derivative (PID) calculation based on a deviation $\Delta\lambda$ between the target slip ratio $\lambda_t$ and the slip ratio $\lambda$ from the slip ratio monitor 21 according to the following formula, thereby to obtain a PID calculation value $K_{PID}$.

[Formula 1]

$$K_{PID} = K_P \Delta\lambda + K_I \sum \Delta\lambda + K_D \big(\Delta\lambda(n-1) - \Delta\lambda(n)\big)$$

Here, $K_P$, $K_I$, and $K_D$ are gain constants of proportional calculation, integral calculation, and differential calculation, respectively. This PID calculation value is zero or a positive value (driving torque). The controller 15 adds the PID calculation value $K_{PID}$ to an IWM torque command value from the primary ECU 11, to calculate a motor torque (shown as "IWM TORQUE" in Fig. 3). However, when the calculated IWM torque is greater than a torque determined with respect to the wheel speed $\omega$, the motor output limiter 23 limits motor output.

By the addition of the PID calculation value $K_{PID}$ in accordance with the result of the monitoring of the slip ratio $\lambda$, when the IWM torque command value from the primary ECU 11 is negative, that is, when a regenerative braking is performed, the regenerative braking is loosened. When the IWM torque command value from the primary ECU 11 is zero or positive, a driving torque is generated. Accordingly, during braking by a brake pedal operation, locking of each wheel can be suppressed or locking tendency of each wheel can be reduced.

In the PID calculation based on the deviation $\Delta\lambda$ between the slip ratio and the target slip ratio, in the case that calculating a differential value of the deviation $\Delta\lambda$ is needed as described below, the controller 22a uses an acceleration detected by the acceleration sensor 19, not a differential value of the vehicle speed. The differential value of the deviation is represented by the following formula.

[ Formula 2]

$$\Delta\lambda(n) - \Delta\lambda(n-1) = \frac{r\omega(V(n-1)-V(n)) - r(\omega(n-1)-\omega(n))V}{V^2}$$

For the term V(n-1)-V(n) corresponding to differentiation of the vehicle speed in the above formula, a value of the acceleration sensor 19 may be used instead of this difference V(n-1)-V(n) in vehicle speed value. Accordingly, when a noise of a vehicle speed signal is great, an influence of the noise can be reduced. In addition, when a road surface frictional coefficient estimated by the road surface frictional coefficient estimation section 20 is lower than a preset road surface frictional coefficient (this means low $\mu$), the controller 22a makes the proportional gain $K_P$ and the integral gain $K_I$ lower than respective predetermined gains. Accordingly, a stability of the control can be ensured. On a low $\mu$ road surface, since instability may be caused when the gains are high, the stability of the control can be ensured by decreasing the proportional gain $K_P$ and the integral gain $K_I$ as described above.

A braking/driving force generated by the torque of the in-wheel motor drive device 6 has, for example, a better controllability and quicker responsiveness than a braking force generated by fluid pressure adjustment mechanism of a hydraulic friction brake. Thus, on a road surface for which the road surface frictional coefficient estimated by the road surface frictional coefficient estimation section 20 is greater than the preset road surface frictional coefficient, the controller 22a is able to enhance responsiveness by making the proportional gain $K_P$ and the integral gain $K_I$ higher than the respective predetermined gains.

According to the antilock brake control device 1 described above, each friction brake 7 presses the brake pad 9 against the brake rotor 8 provided in each wheel 2 thereby to generate a frictional force to brake the wheel 2. The slip ratio of the wheel 2 changes moment by moment, and the slip ratio monitor 21 constantly calculates and monitors the slip ratio of the wheel 2. When the monitored slip ratio exceeds the target slip ratio, the driving torque addition section 22 adds a positive torque, that is, the torque in the driving direction, to the torque command value for the motor 3, thereby suppressing locking of the wheel 2. When adding the torque in the driving direction, for example, for antilock brake control, the antilock brake control device 1 adjusts the fluid pressure of the brake fluid by the fluid pressure adjustment mechanism provided at the master cylinder, or the like, such that the friction brake 7 is not operated. Thus, an additional actuator or the like for antilock brake control is not needed for the friction brake 7, and it is possible to suppress locking of the wheel 2 or reduce locking tendency of the wheel 2 at low cost, for example, by merely rewriting a control program or the like.

Other embodiments will be described. In the following description of each embodiment, portions corresponding to the matters described in the preceding embodiment are designated by the same reference numerals, and the redundant description thereof is omitted. When only a part of a configuration is described, the remaining part of the configuration is the same as that of the previously described embodiment unless otherwise specified. The same advantageous effects are achieved by the same configuration. In addition to the combinations of portions described specifically in each embodiment, it is also possible to partially combine the embodiments unless any problem is particularly posed due to the combination.

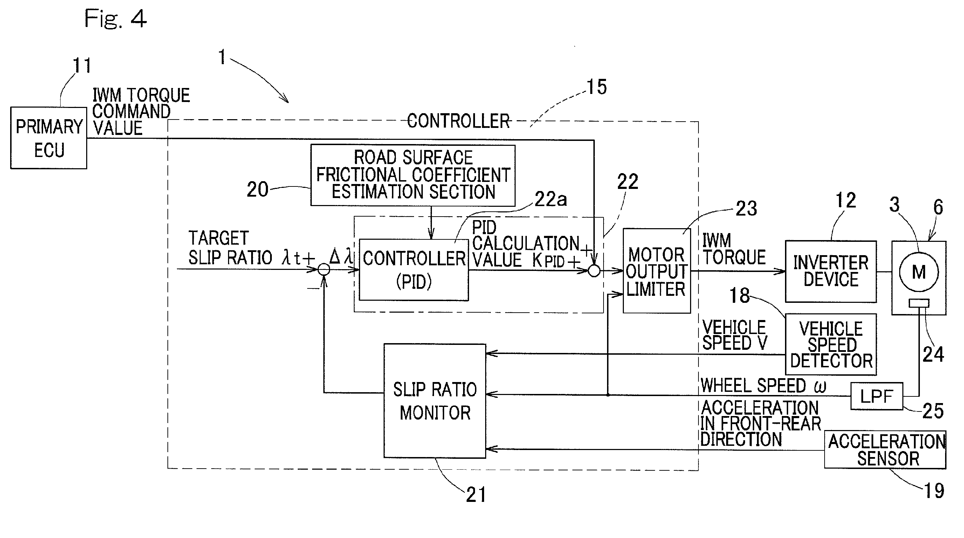

As shown in Fig. 4, the slip ratio monitor 21 may obtain the wheel speed $\omega$ by using a low-pass filter 25 that is different from the low-pass filter for control of the motor 3 or is not for motor control and that has a cut-off frequency higher than a predetermined frequency, in measurement/calculation of the wheel speed $\omega$. In comparison with the case of obtaining the wheel speed $\omega$ using the low-pass filter 25 that is not for control of the motor 3 and has a high cut-off frequency as described above, a response delay can be made smaller than the case where the wheel speed $\omega$ is obtained without using the low-pass filter 25. During antilock brake control, the response delay can be reduced to improve the accuracy of slip ratio control.

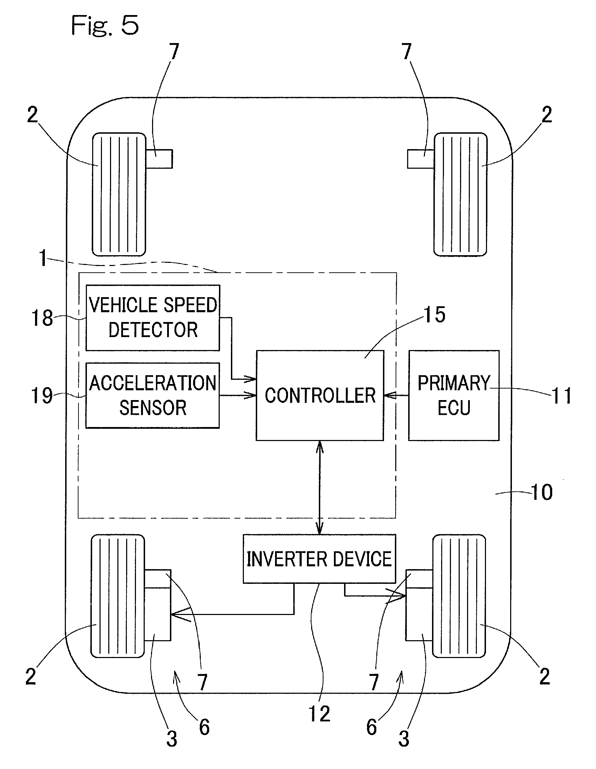

In the first embodiment, the example in which the antilock brake control device 1 is mounted on the four-wheel drive vehicle has been described, but it is not limited to this example. For example, as shown in Fig. 5, the antilock brake control device 1 may be mounted on a two-wheel drive vehicle that is driven with left and right rear wheels 2. Alternatively, the antilock brake control device 1 may be mounted on a two-wheel drive vehicle that is driven with left and right front wheels 2 (not shown).

In the vehicle including the electrical friction brake that presses the brake pad against the brake rotor by the electric actuator, on the basis of the same idea as that of taking the PID calculation value $K_{PID}$ into consideration in the driving torque control, when the slip ratio monitored by the slip ratio monitor exceeds the target slip ratio, for example, cooperative control of performing the above-described periodic loosening operation of the brake pad by the electric actuator which cooperative control corresponds to antilock brake control may be performed solely or together with addition of the torque in the driving direction to the IWM torque command value. In this case as well, an additional actuator is not needed for the friction brake, and locking of each wheel 2 can be suppressed or locking tendency of each wheel 2 can be reduced at low cost.

In each in-wheel motor drive device 6 of this embodiment, as the reducer, a cycloidal reducer, a planetary reducer, a reducer with two parallel shafts, or another reducer can be used. In addition, each in-wheel motor drive device 6 of this embodiment may be a so-called direct motor type in which a reducer is not used. It should be understood that although the described above is regarding the each in-wheel motor drive device 6, the vehicle equipped with the antilock brake control device 1 may be a so-called on-board type in which each wheel, a drive shaft, and a motor are connected to each other in a one-by-one relation, and may also include a hybrid car in which each in-wheel motor drive device 6 and an internal combustion engine are used in combination, and the like.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included within the scope.

[Reference Numerals]

1 ···· antilock brake control device
2 ···· wheel
3 ···· motor
5 ···· wheel bearing
8 ···· brake rotor
9 ···· brake pad (press member)
7 ···· friction brake
19 ···· acceleration sensor
20 ···· road surface frictional coefficient estimation section
21 ···· slip ratio monitor
22 ···· driving torque addition section
25 ···· low-pass filter

**Claims**

1. An antilock brake control device in a vehicle including: a motor configured to drive a wheel; a wheel bearing configured to transmit a rotation of the motor to the wheel and to rotationally support the wheel; and a friction brake configured to urge a press member against a brake rotor provided in each wheel, thereby to generate a frictional force to brake the wheel, the antilock brake control device comprising:

   a slip ratio monitor configured to monitor a slip ratio of the wheel; and
   a driving torque addition section configured to add a torque in a driving direction to a torque command value for the motor when the slip ratio monitored by the slip ratio monitor exceeds a preset target slip ratio, wherein an operation of the friction brake is suspended when the torque in the driving direction is added to the torque command value for the motor.

2. The antilock brake control device as claimed in claim 1, wherein the driving torque addition section determines the torque to be added, through PID control based on a deviation between the monitored slip ratio and the target slip ratio.

3. The antilock brake control device as claimed in claim 2, further comprising an acceleration sensor configured to detect an acceleration in a front-rear direction of the vehicle, wherein
   the driving torque addition section uses the acceleration detected by the acceleration sensor instead of a differential value of a vehicle speed, in the case that calculating a differential value to be used in the PID control based on the deviation is needed.

4. The antilock brake control device as claimed in claim 2 or 3, further comprising a road surface frictional coefficient estimation section configured to estimate a road surface frictional coefficient, wherein
   when the road surface frictional coefficient estimated by the road surface frictional coefficient estimation section is lower than a preset road surface frictional coefficient, the driving torque addition section makes a proportional gain and an integral gain lower than respective predetermined gains.

5. The antilock brake control device as claimed in any one of claims 2 to 4, further comprising a road surface frictional coefficient estimation section configured to estimate a road surface frictional coefficient, wherein
when the road surface frictional coefficient estimated by the road surface frictional coefficient estimation section is higher than a preset road surface frictional coefficient, the driving torque addition section makes a proportional gain and an integral gain higher than the respective predetermined gains.

6. The antilock brake control device as claimed in any one of claims 1 to 5, wherein the slip ratio monitor monitors a slip ratio $\lambda$ of the wheel that is obtained on the basis of a formula, $\lambda = (V-r\omega)/V$, from an angular speed $\omega$ of the wheel, a vehicle speed V, and a radius r of the wheel, and obtains the angular speed $\omega$ of the wheel by using a low-pass filter that is different from a low-pass filter for control of the motor and that has a cut-off frequency higher than a predetermined frequency.

7. The antilock brake control device as claimed in any one of claims 1 to 6, wherein the torque in the driving direction is added to the torque command value for the motor by the driving torque addition section in a state where the press member is urged against the brake rotor thereby to cause the friction brake to perform a braking operation by an operation performed by a driver.

Fig. 1

Fig. 2

13 — ACCELERATOR PEDAL

14 — BRAKE PEDAL

PRIMARY ECU — 11
TORQUE ALLOCATION BLOCK — 11a

BATTERY — 26

ANTILOCK BRAKE CONTROL DEVICE — 1

18 — VEHICLE SPEED DETECTOR

19 — ACCELERATION SENSOR

CONTROLLER — 15

12 — INVERTER DEVICE

17 — MOTOR CONTROL SECTION

POWER CIRCUIT SECTION — 16

PWM DRIVER
16b

INVERTER
16a

2

7 { 9
   8

24

5  4  3
   6

Fig. 3

Fig. 4

EP 3 072 730 A1

Fig. 5

## INTERNATIONAL SEARCH REPORT

| | International application No. |
|---|---|
| | PCT/JP2014/079407 |

**A. CLASSIFICATION OF SUBJECT MATTER**
*B60L15/20*(2006.01)i, *B60T8/176*(2006.01)n

According to International Patent Classification (IPC) or to both national classification and IPC

**B. FIELDS SEARCHED**

Minimum documentation searched (classification system followed by classification symbols)
B60L15/20, B60T8/176

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 4-150702 A (Hitachi, Ltd., Hitachi Automotive Engineering Co., Ltd.), 25 May 1992 (25.05.1992), page 3, upper right column, line 19 to page 4, upper right column, line 15; fig. 1 to 4 (Family: none) | 1-7 |
| Y | JP 5-270385 A (Toyota Motor Corp.), 19 October 1993 (19.10.1993), paragraphs [0020], [0026] to [0039]; fig. 1 (Family: none) | 1-7 |
| Y | JP 2002-46507 A (Mazda Motor Corp.), 12 February 2002 (12.02.2002), paragraphs [0069] to [0070], [0098] to [0102] (Family: none) | 2-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 January 2015 (20.01.15) | 03 February 2015 (03.02.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2014/079407

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-6959 A (NEC Home Electronics Ltd., Nissin Kogyo Co., Ltd.), 13 January 1998 (13.01.1998), paragraphs [0030] to [0036], [0041], [0050] to [0055] & US 5934771 A & GB 2314389 A | 4-6 |
| A | JP 2007-49825 A (Hitachi, Ltd.), 22 February 2007 (22.02.2007), paragraphs [0027], [0033], [0049] to [0125]; fig. 11 & US 2007/0038340 A1 & EP 1752332 A2 & CN 1911706 A | 1-7 |
| A | JP 2011-61945 A (Mitsubishi Fuso Truck and Bus Corp.), 24 March 2011 (24.03.2011), paragraphs [0046] to [0097], [0156]; fig. 3 (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013237726 A
- JP H09328063 A
- JP 3972535 B